# EUROPEAN PATENT APPLICATION

(11) **EP 2 689 921 A1**
(43) Date of publication of application: **29.01.2014**
(21) Application number: 13177465.5
(22) Date of filing: 22.07.2013
(51) Int. Cl.: B29D 30/26, B29D 30/20

(54) **Tire building system and method**

(30) Priority: 25.07.2012 US 201213557252
(71) Applicant: The Goodyear Tire & Rubber Company, Akron, Ohio 44316 (US)
(72) Inventor: Marechal, Frederic Marie Bernard, B-6781 Selange (BE); Royer, Thierry, B-6700 Arlon (BE)
(74) Representative: Kutsch, Bernd

(57) **Abstract**

A tire building machine that includes a support housing (140) for rotating the machine about a vertical axis, a support frame (124) operatively attached to the support housing (140) such that the support housing rotates the support frame (124) about the vertical axis, a first drum (126) rotatable about a first horizontal axis by a first motor, the first drum and the first motor being secured to the support frame (124), a first cylinder for horizontally retracting the first drum along the first horizontal axis from an extended position to a retracted position, a second drum (140) rotatable about a second horizontal axis by a second motor (146), the second horizontal axis being parallel to the first horizontal axis, the second drum (140) and the second motor (146) being secured to the support frame (124), and a second cylinder for horizontally retracting the second drum (140) along the second horizontal axis from an extended position to a retracted position.

## Description

### Field of Invention

The present invention relates to pneumatic tires, and more particularly, to a machine for assembling pneumatic tires.

### Background of the Invention

Changes in road conditions may cause the performance of the vehicle tires to become less than satisfactory and result in driver dissatisfaction. For example, tires on a vehicle are optimally expected to contribute to maximum fuel efficiency on dry, straight roads; maximum handling performance on roads having severe curves; and wet traction performance is sought on water covered roads. To achieve a tire having a versatility to perform satisfactorily on all possible road conditions is the goal of all tire manufacturers.

Turrets having two drums have been designed for tire building machines heretofore to provide for the assembly of tire components and performing other tire building operations at two distinct positions. Where the drums have been rotated 180 degrees from a first position to a second position, a pit in the floor has been utilized so that the drums may be at a suitable height above the floor for performing manual tire assembly operations. When the drum shafts have been coaxial, a reinforced turret construction has been required to support the weight of the drums to be carried at substantial distances from the axis of rotation of the turret determined by the length of the drum shafts.

Further, horizontal rotation of the turret about a vertical access has previously required a large cleared space proximate the turret for allowing such rotation. As stated above, greater access to the turret is desired.

### Summary of the Invention

The invention relates to a tire building system in accordance with claim 1 and to a method in accordance with claim 5.

Dependant claims refer to preferred embodiments of the invention.

A tire building system in accordance with the present invention includes a support housing for rotating the machine about a vertical axis, a support frame operatively attached to the support housing such that the support housing rotates the support frame about the vertical axis, a first drum rotatable about a first horizontal axis by a first motor, the first drum and the first motor being secured to the support frame, a first cylinder for horizontally retracting the first drum along the first horizontal axis from an extended position to a retracted position, a second drum rotatable about a second horizontal axis by a second motor, the second horizontal axis being parallel to the first horizontal axis, the second drum and the second motor being secured to the support frame, and a second cylinder for horizontally retracting the second drum along the second horizontal axis from an extended position to a retracted position.

According to another aspect of the invention, the first cylinder extends the first drum from the retracted position to the extended position.

According to still another aspect of the invention, the second cylinder extends the second drum from the retracted position to the extended position.

According to yet another aspect of the invention, the first cylinder and the second cylinder preferably retract the first and second drums simultaneously.

According to still another aspect of the invention, the first cylinder and the second cylinder preferably extend the first and second drums simultaneously.

A method for operating a tire building machine, in accordance with the present invention, includes the steps of: operatively attaching a support frame to a support housing such that the support housing rotates the support frame about a vertical axis; securing a first drum and a first motor being to the support frame; rotating the first drum about a first horizontal axis by the first motor; horizontally retracting the first drum along the first horizontal axis from an extended position to a retracted position by a first cylinder; securing a second drum and a second motor being to the support frame; rotating the second drum about a second horizontal axis by the second motor; and horizontally retracting the second drum along the second horizontal axis from an extended position to a retracted position by a second cylinder.

According to another aspect of the method, the method further includes the step of extending the first cylinder and the first drum from the retracted position to the extended position.

According to still another aspect of the method, the method further includes the step of extending the second cylinder and the second drum from the retracted position to the extended position.

According to yet another aspect of the method, both said retracting steps may occur simultaneously.

According to still another aspect of the method, the method may further include the step of extending both the first and second drums simultaneously to the extended position.

### Brief Description of the Drawings

FIG. 1 is a schematic perspective view of a tire building machine in accordance with the present invention under a first condition.
FIG. 2 is a schematic perspective view of the tire building machine of FIG. 1 under a second condition.
FIG. 3 is a schematic top view of the machine of FIG. 1.
FIG. 4 is a schematic top view of the machine of FIG. 2.
FIG. 5 is a schematic front elevation of an example two drum turret assembly.
FIG. 6 is a schematic side elevation of the example turret assembly taken along line 6--6 in FIG. 5 with the drums removed.
FIG. 7 is a schematic rear elevation of the example turret assembly taken along line 7--7 in FIG. 6 with parts being broken away.
FIG. 8 is schematic fragmentary top view of the example turret assembly taken along line 8--8 in FIG. 5.

### Description of Example Embodiments of the Present Invention

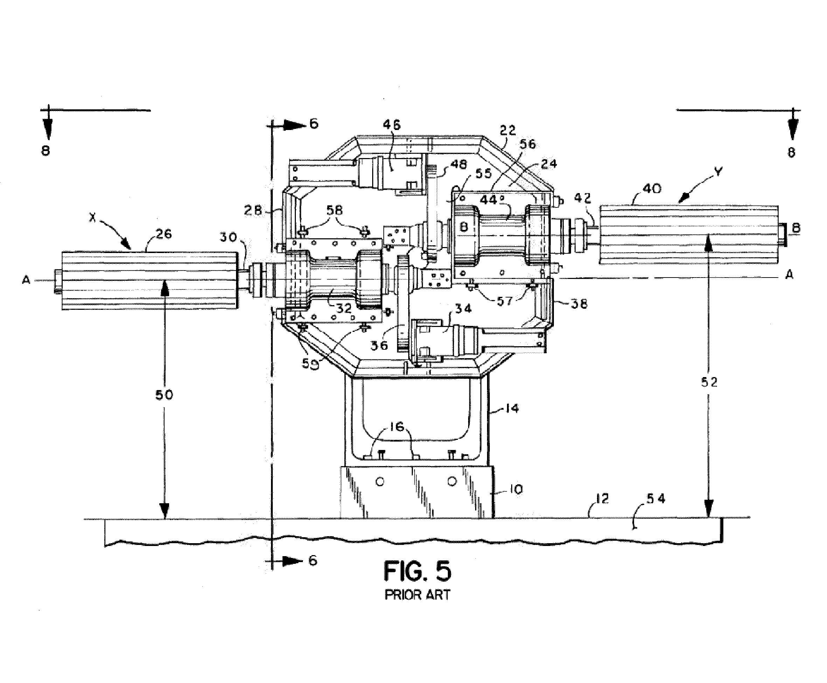

With reference to FIGS. 5, 6, and 7, an example base 10 is shown mounted on a floor surface 12 and fastened to a turret support housing 14 by bolts 16 or other suitable fasteners. Pillow blocks 18 may be mounted on the housing 14 providing bearings for supporting a turret drive shaft 20. A turret 22 may be mounted on one end of the shaft 20 and may include a turret supporting plate 24.

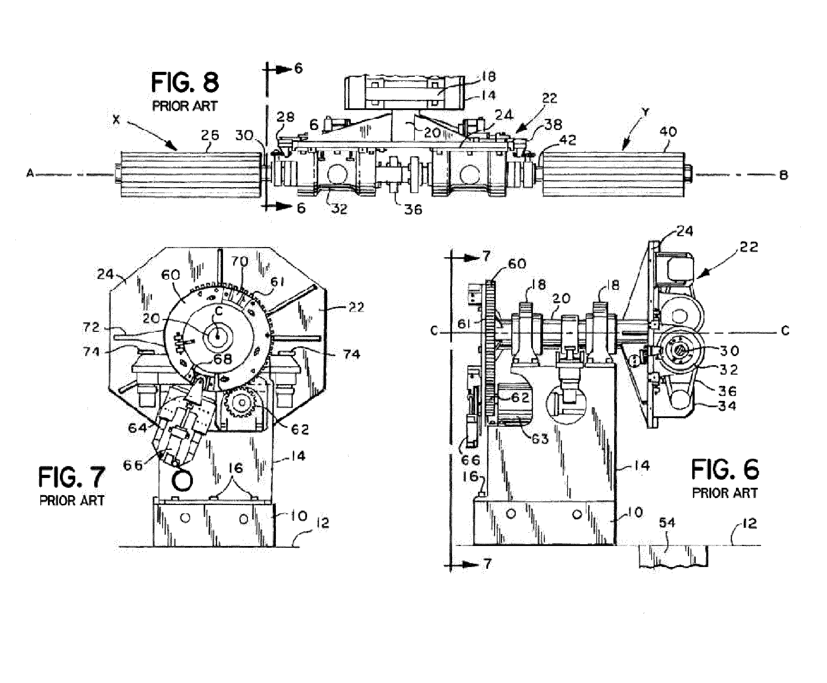

Referring to FIGS. 5 and 8, a first drum 26 may be rotatably mounted on the turret supporting plate 24 and may extend outwardly from a first side 28 of the turret 22 for rotation about a first horizontal axis A-A in a first position X. The first drum 26 may also be known as a slave drum and may be mounted on a slave shaft 30 rotatably supported in a slave bearing 32 mounted on the supporting plate 24. A slave drum drive motor 34 may also be mounted on the supporting plate 24 in a driving relationship with the slave shaft 30 through a slave belt 36 extending around pulleys mounted on the slave shaft 30 and the shaft of the slave drum drive motor 34.

Mounted on a second side 38 of the turret 22 may be a second tire building drum 40 rotatable about a second horizontal axis B--B in a second position Y. The second tire building drum 40, which may be known as a master drum, may be mounted on a master shaft 42 supported in a master bearing 44 mounted on the supporting plate 24. The master shaft 42 may be driven by a master drum drive motor 46 mounted on the supporting plate 24 and may be connected by a master belt 48 to the master shaft through drive pulleys.

As shown in FIG. 5, the axis A--A of the first drum 26 and the axis B--B of the second drum 40 may be in a parallel relationship so that, in an operating position, the first drum 26 may have a first height 50 of 40 inches (101.6 cm) above the floor surface 12 and the second drum 40 may have a second height 52 of 50 inches (127 cm) above the floor surface. Thus, when manual operations for applying tire components to the drums 26, 40 are required, the drums 26, 40 may be close to the floor surface 12 in order that the operator may reach the drums.

In addition to the axes A--A and B--B being parallel, the slave shaft 30 may be vertically offset from the master shaft 42 for mitigating the horizontal distance the first drum 26 and second drum 40 extend outwardly/laterally from the first side 28 and second side 38, respectively. This configuration may limit the space required for rotation of the turret 22 and the depth of a pit 54 necessary for permitting rotation of the turret about a horizontal axis C--C of the turret drive shaft 20.

The axes A-A, B--B may be symmetrical about the axis C--C of the turret drive shaft 20. The master bearing 44 may be mounted on the supporting plate 24 in a predetermined position. Edges of the master bearing 44 may be located adjacent registers 55, 56 on the supporting plate 24 with adjusting screws 57 threaded in the plate. Then, the position of the slave bearing 32 may be adjusted by adjusting screws 58, 59 threaded on the supporting plate 24 so that the axis A--A of the first drum 26 is parallel with the axis B--B of the second drum 40, as well as being symmetrical about axis C--C of the turret drive shaft 20. With this adjustment, the first drum 26 and second drum 40 may be in identical positions for the first position X and the second position Y so that tire components may be applied to the drums in identical positions.

Referring to FIGS. 6 and 7, a drive gear 60 may be mounted on a rear end of the turret drive shaft 20. The drive gear 60 may have a semi-circular gear rack 61 engagable by a pinion gear 62 driven by a turret drive motor 63 mounted on the turret support housing 14. Referring to FIG. 7, the drive gear 60 may be rotated from the position shown in FIG. 7 in a clockwise direction 180 degrees so that the turret supporting plate 24, as shown in FIG. 5 will rotate 180 degrees in a counter clockwise direction moving the first drum 26 from the first position X shown in FIG. 5 to the second position Y shown in FIG. 5 and moving the second drum 40 from the second position Y shown in FIG. 5 to the first position X shown in FIG. 5. In the two operating positions X and Y, a cam roller 64 may be actuated by a pneumatic lock 66 extending into a tapered slot 68 or 70 at the operating positions of the turret 22 to lock the turret in an operating position.

In the event the motor 63 does not stop to permit actuation of the cam roller 64 by the pneumatic lock 66, the length of the semi-circular gear rack 61 may be predetermined for disengaging the pinion 60 whereupon the turret drive shaft 20 may continue to rotate and an arm 72, mounted on the turret drive shaft and extending outwardly therefrom, may be positioned to engage shock absorbers 74 mounted on the housing 14. One of the shock absorbers 74 may be provided at each side of the housing 14 to limit the rotation of the turret supporting plate 24 in either direction by engagement with the arm 72.

In an example tire building operation, tire components may be applied to the first drum 26 and the second drum 40 by rotating the drums through actuation of the slave drum drive motor 34 and master drum drive motor 36 in response to suitable controls connected to the motors. After application of the tire components, the cam roller 64 may be released and the turret drive motor 63 actuated in response to suitable controls for rotating the turret 22 through 180 degrees whereby the first drum 26 is moved to the second position Y and the second drum 40 is moved to the first position X, as shown in FIG. 5. Simultaneously with the application of additional tire components on the first drum 26 in the second position Y at the second height 52, tire components may be provided on the second tire drum 40 in the first position X, as shown in FIG. 5. It is understood that the first drum 26 and second drum 40 may be identical or different sizes and types substituted for these drums and adaptable for different tire building operations.

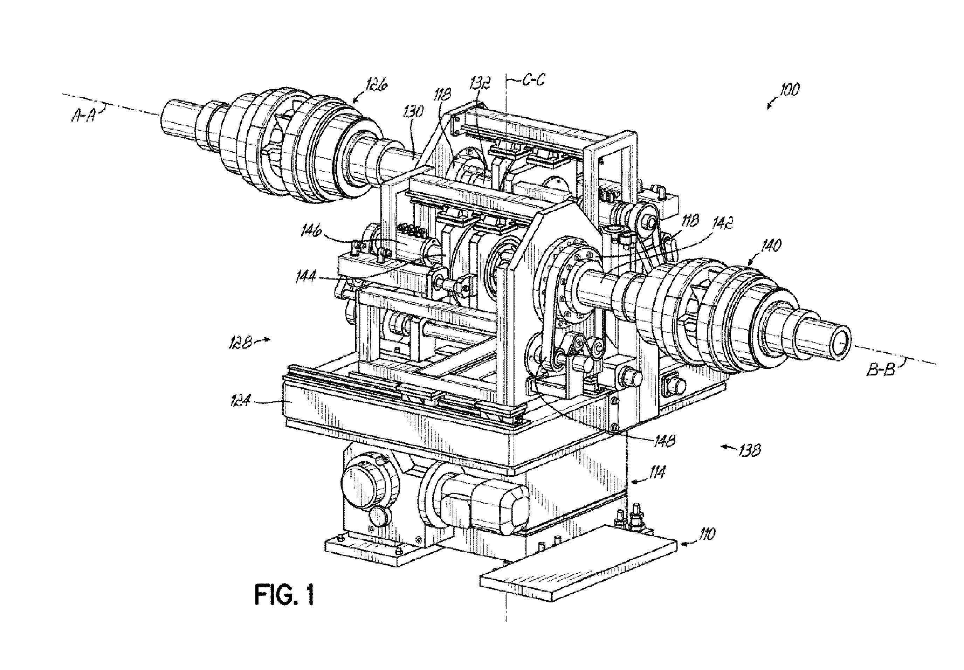

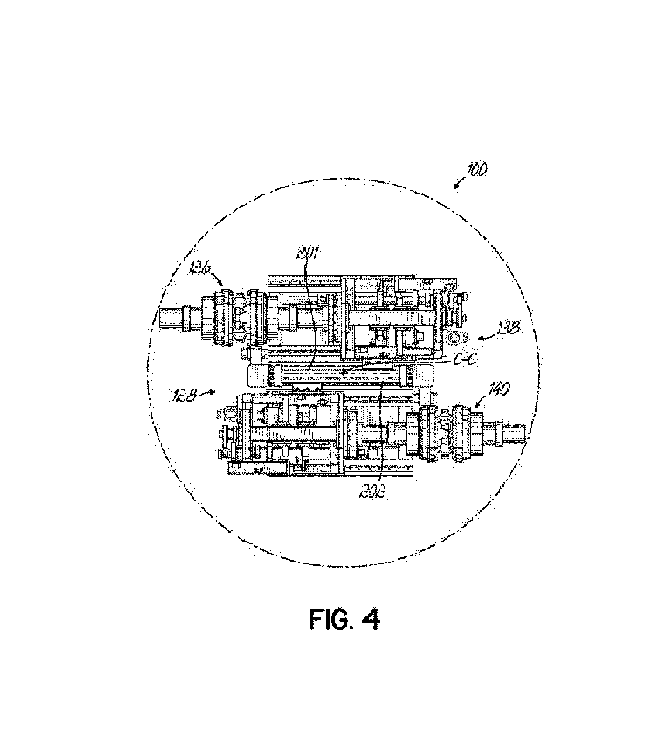

With reference to FIGS. 1-4, a machine 100 in accordance with the present invention may include a base 110 mounted on a floor surface and fastened to a turret support housing 114. Referring to FIGS. 1 and 4, a first drum 126 is rotatably mounted on a turret support frame 124 and may extend outwardly from a first side 128 of the turret support frame 124 for rotation about a first horizontal axis A-A. The first drum 126 is mounted on a first shaft 130 rotatably supported in a first bearing 132 mounted on the turret support frame 124. A first drum drive motor may also be mounted on the support frame 124 in a driving relationship with the first shaft 130 through a first belt extending around pulleys mounted on the first shaft 130 and the shaft of the first drum drive motor.

Mounted on a second side 138 of the rotatable turret support frame 124 is a second tire building drum 140 rotatable about a second horizontal axis B--B. The second tire building drum 140 is mounted on a second shaft 142 supported in a second bearing 144 mounted on the support frame 124. The second shaft 142 may be driven by a second drum drive motor 146 mounted on the support frame 124 and may be connected by a second belt 148 to the second shaft through drive pulleys.

As shown in FIG. 1, the axis A--A of the first drum 126 and the axis B--B of the second drum 140 may be in a parallel relationship so that the first drum 126 and the second drum 140 may have identical heights above the floor surface (as compared to the example machine of FIGS. 5-8). Thus, when manual operations for applying tire components to the drums 126, 140 are required, the drums 126, 140 may be close to the floor surface in order that the operator may reach the drums.

In addition to the axes A--A and B--B being parallel, the first shaft 130 may be horizontally offset from the second shaft 142 for mitigating the horizontal distance the first drum 126 and second drum 140 extend outwardly/laterally from the first side 128 and second side 138, respectively. This configuration, by itself, may limit the space required for rotation of the support frame 124 about a vertical axis C--C by the turret support housing 114. The axes A--A, B--B may be symmetrical about the vertical axis C--C of the turret support housing 114.

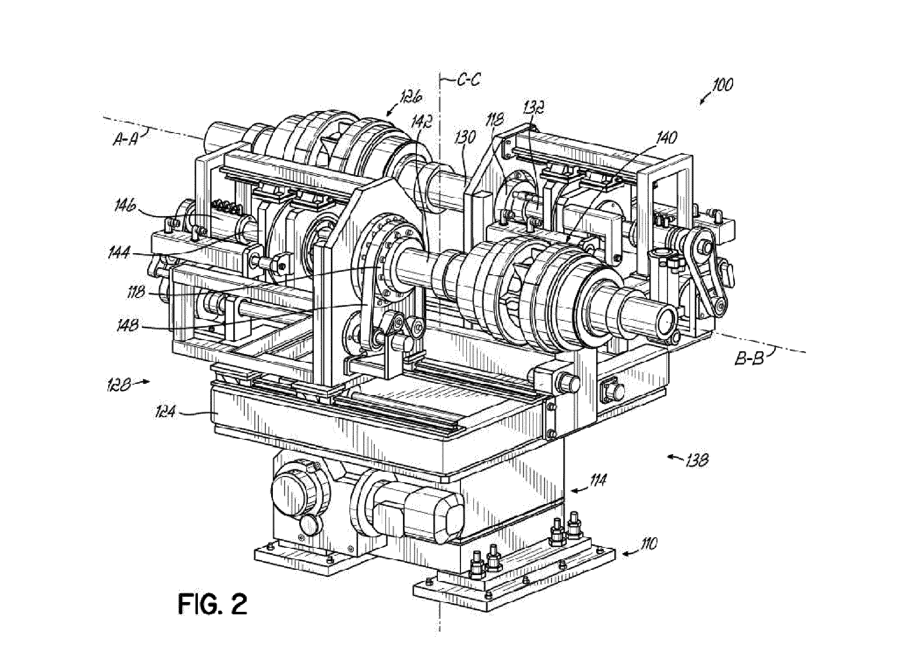

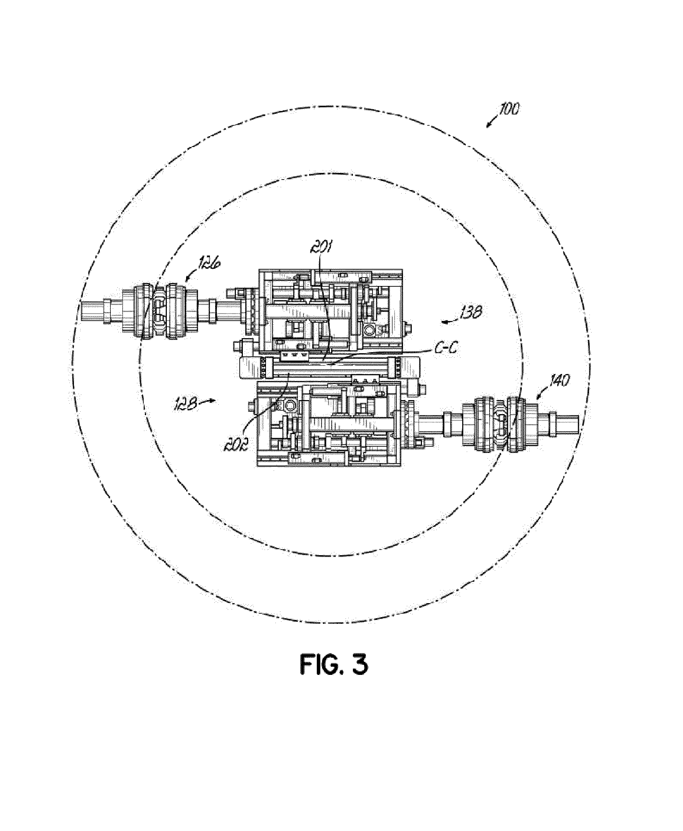

The machine 100 may further include two cylinders 201, 202 mounted to the support frame 124. The cylinders may horizontally retract the drums 126, 140 so that less space is required around the machine when the turret support housing 114 rotates the machine about the axis C--C (FIGS. 2 & 4). Subsequent to this rotation, the cylinders 201, 202 may extend the drums 126, 140 to their initial position (FIGS. 1 & 3). The cylinders 201, 202 may actuated pneumatically or hydraulically.

## Claims

1. A tire building machine comprising:
a support housing for rotating the machine about a vertical axis;
a support frame operatively attached to the support housing such that the support housing rotates the support frame about the vertical axis;
a first drum rotatable about a first horizontal axis by a first motor, the first drum and the first motor being secured to the support frame;
a first cylinder for horizontally retracting the first drum along the first horizontal axis from an extended position to a retracted position;
a second drum rotatable about a second horizontal axis by a second motor, the second horizontal axis being parallel to the first horizontal axis, the second drum and the second motor being secured to the support frame; and
a second cylinder for horizontally retracting the second drum along the second horizontal axis from an extended position to a retracted position.

2. The tire building machine as set forth in claim 1 wherein the first cylinder extends the first drum from the retracted position to the extended position.

3. The tire building machine as set forth in claim 2 wherein the second cylinder extends the second drum from the retracted position to the extended position.

4. The tire building machine as set forth in claim 1 wherein the first cylinder and the second cylinder retract the first and second drums simultaneously.

5. The tire building machine as set forth in claim 4 wherein the first cylinder and the second cylinder extend the first and second drums simultaneously.

6. A method for operating a tire building machine comprising the steps of:
operatively attaching a support frame to a support housing such that the support housing rotates the support frame about a vertical axis;
securing a first drum and a first motor being to the support frame;
rotating the first drum about a first horizontal axis by the first motor;
horizontally retracting the first drum along the first horizontal axis from an extended position to a retracted position by a first cylinder;
securing a second drum and a second motor being to the support frame;
rotating the second drum about a second horizontal axis by the second motor; and
horizontally retracting the second drum along the second horizontal axis from an extended position to a retracted position by a second cylinder.

7. The method as set forth in claim 6 further including the step of extending the first cylinder and the first drum from the retracted position to the extended position.

8. The method as set forth in claim 6 further including the step of extending the second cylinder and the second drum from the retracted position to the extended position.

9. The method as set forth in claim 6 wherein both said retracting steps occur simultaneously.

10. The method as set forth in claim 6 further including the step of extending both the first and second drums simultaneously to the extended position.

11. A system for rotating a tire building machine comprising:
a support housing for rotating the machine about a vertical axis;
a support frame operatively attached to the support housing such that the support housing rotates the support frame about the vertical axis;
a first drum rotatable about a first horizontal axis, the first drum being secured to the support frame;
a first cylinder for horizontally retracting the first drum along the first horizontal axis from an extended position to a retracted position;
a second drum rotatable about a second horizontal axis, the second horizontal axis being parallel to the first horizontal axis, the second drum being secured to the support frame; and
a second cylinder for horizontally retracting, simultaneously with the first drum, the second drum along the second horizontal axis from an extended position to a retracted position.

12. The system as set forth in claim 11 wherein the first cylinder extends the first drum from the retracted position to the extended position.

13. The system as set forth in claim 12 wherein the second cylinder extends the second drum from the retracted position to the extended position.

14. The system as set forth in claim 13 wherein the first cylinder and the second cylinder retract the first and second drums simultaneously.

15. The system as set forth in claim 14 wherein the first cylinder and the second cylinder extend the first and second drums simultaneously.
